# EUROPÄISCHE PATENTSCHRIFT

(11) **EP 1 955 935 B1**
(45) Veröffentlichungstag und Bekanntmachung des Hinweises auf die Patenterteilung: **12.10.2011**
(21) Anmeldenummer: 08002289.0
(22) Anmeldetag: 07.02.2008
(51) Int. Cl.: B62J 9/00, A45C 7/00, A45C 13/10, A45C 5/14

(54) **Motorrad-Koffer-System**
Motorcycle luggage system
Système de coffre de moto

(30) Priorität: 07.02.2007 DE 202007001804 U
(43) Veröffentlichungstag der Anmeldung: 13.08.2008
(73) Patentinhaber: Klaus Kunststofftechnik GmbH, 87700 Memmingen (DE); BMW AG, 80788 München (DE)
(72) Erfinder: Weber, Klaus-Peter, 35396 Gießen (DE); Reinhart, Peter, 82380 Peißenberg (DE)
(74) Vertreter: nospat Patent- und Rechtsanwälte Naefe Oberdorfer Schmidt

(56) Entgegenhaltungen:
- DE-A1-102004 033 688
- DE-C1- 4 133 845
- DE-U1- 20 010 581
- US-A- 4 854 430

## Beschreibung

Die Erfindung betrifft ein volumenverstellbares Motorradgepäckkoffersystem nach dem Oberbegriff des Anspruchs 1.

Motorradgepäckkoffer, deren Volumen sich verstellen lässt, sind bekannt.

Am einfachsten lässt sich das Volumen bei den so genannten Softbags verstellen. Sehr häufig sind diese Softbags so konstruiert, dass ein um den Außenumfang der Tasche herumgehender Reißverschluss geöffnet werden kann, der eine oder mehrere Dehnfalten freigibt, die eine stärke Ausdehnung der Tasche in Richtung quer zu ihrer Breite ermöglichen. Auch bei Einsatz moderner Textilien, wie etwa GoreTex, ist es gerade im Bereich der Dehnfalten schwierig, den Softbag wirklich dauerhaft wasserdicht zu bekommen.

Es sind aber auch bereits Hartschalenkoffer bekannt, deren Volumen sich verändern lässt. Diese Koffersysteme sind meist so konstruiert, dass eine der beiden Hartschalen gegen eine andere, tiefere Hartschale ausgetauscht werden kann, um im Bedarfsfall ein größeres Stauvolumen zu schaffen. Es ist recht unkomfortabel, den Koffer sozusagen erst zerlegen zu müssen, um ihn zu vergrößern oder verkleinern. Zudem wird sich der Fahrer im Regelfall vor der Tour entscheiden müssen, ob er mit kleinem oder großem Koffer fahren will, denn er kann ja schlecht noch eine zusätzliche Hartschale mitführen.

Ferner sind in der Praxis gelegentlich auch "teleskopierbare" Hartschalenkoffer anzutreffen, vgl. etwa das deutsche Gebrauchsmuster DE 200 10 581 U1. Diese Hartschalenkoffer bestehen aus einem mittig zwischen den Hartschalen angeordneten Rahmen, in dem die beiden Hartschalen in Querrichtung verschiebbar geführt sind. Je nachdem, welches Stauvolumen aktuell benötigt wird, werden die Hartschalen aus dem mittleren Rahmenteil in Querrichtung herausgezogen oder in dieses "hineinteleskopiert" und dann in der aktuellen Position gegenüber dem Rahmen festgesetzt. Der mittig angeordnete Rahmen ist zweiteilig - je ein Teil des Rahmens klappt zusammen mit der von ihm gehaltenen Kofferschale auf und zu. Der Vorteil solcher Koffersysteme ist, dass sich ihr Volumen auch während der Tour verstellen lässt, etwa um eine sportlich gefahrene Tagestour zu unternehmen, bei der der Großteil des Gepäcks im Hotel bleibt.

Einen Hartschalenkoffer, der dieses Funktionsprinzip in anderem Zusammenhang verwirklicht, ist beispielsweise aus der deutschen Patentschrift DE 40 32 802 bekannt. Um die Hartschalen aus dem mittleren Rahmenteil herausziehen zu können, oder in dieses hinein schieben zu können, sind zunächst eine ganze Reihe von Klemmschrauben zu lösen. Dann können die Hartschalen verschoben werden. Anschließend müssen die Klemmschrauben wieder festgezogen werden. Diese Konstruktion verursacht nicht nur einigen Herstellungsaufwand, sondern ist auch umständlich zu bedienen. Sie birgt zudem ganz generell die Gefahr, dass Fehler passieren - nämlich, dass der Koffer benutzt wird, ohne dass die die verschiebbaren Schalen im mittleren Rahmenteil haltenden Klemmschrauben richtig fest gezogen sind.

Der Einsatz dieses Funktionsprinzips für Motorradgepäckkoffer bringt neben der relativ umständlichen Bedienung des Teleskopsystems eine Reihe von weiteren Nachteilen mit sich. Von Motorradgepäckkoffern wird verlangt, dass sie auch unter widrigen Bedingungen (Vibrationen, Hitze, Kälte, durch hohe Geschwindigkeiten bedingter Staudruck etc.) dauerhaft wasserdicht bleiben. Genau dies bereitet bei den teleskopierbaren Koffern Schwierigkeiten. Die Abdichtung zwischen dem mittleren Rahmenteil und den ihm gegenüber verschiebbaren Hartschalen ist schon von Haus aus schwierig. Denn die Dichtung kann ja hier nicht sehr stark angepresst werden, da sich die Hartschale andernfalls auf Grund zu hoher Reibungskräfte nicht mehr ohne weiteres gegenüber dem mittleren Rahmenteil verschieben lässt. Erst recht ist kaum zu gewährleisten, dass diese Dichtung auch dann noch funktionstüchtig bleibt, wenn die Hartschalen schon diverse Male aus dem Rahmenteil herausgezogen und wieder hinein geschoben worden sind. Besondere Probleme bereiten dabei die Verschmutzungen, denen Motorradkoffer zwangsläufig ausgesetzt sind. Es lässt sich nicht vermeiden, dass schon nach kurzer Zeit auch in den Bereich der Dichtung Schmutz hinein gelangt, der dort abrasiv wirkt und die Dichtung vorzeitig verschleißt.

Es ist daher die Aufgabe der Erfindung, einen Motorradgepäckkoffer zu schaffen, dessen Volumen sich mit wenigen, einfachen Handgriffen verstellen lässt, ohne dadurch eine potenzielle konstruktive Schwachstelle des Koffers zu schaffen.

Diese Aufgabe wird erfindungsgemäß mit den Merkmalen des Anspruchs 1 gelöst.

Die erfindungsgemäße Konstruktion erlaubt es auf ganz einfache Art und Weise das Volumen des Koffers zu verändern. Es muss lediglich das die beiden Halbschalen verbindende Scharniersystem gelöst werden. Dann können die beiden Halbschalen ein Stück auseinander gezogen werden. Danach wird der Distanzring eingesetzt und die beiden Halbschalen gegen den Distanzring oder einen anderen Distanzring wieder zugeklappt.

Anders, als bei den Konstruktionen, bei denen der Stauraum durch Austausch einer der Hartschalen verändert wird, lässt sich bei dem erfindungsgemäßen Koffersystem das Volumen auch während der Tour bequem ändern. An Tagen, an denen mit kleinem Gepäck gefahren werden soll, wird einfach der Distanzring mit einigen Handgriffen ausgebaut und zusammen mit dem überflüssigen Gepäck im Hotel zurückgelassen.

Die erfindungsgemäße Konstruktion lässt sich ohne weiteres auch zuverlässig und dauerhaft abdichten. Denn sie ist so gestaltet, dass ein simples und zuverlässiges Dichtungsprinzip eingesetzt werden kann - es kann eine Dichtung verwendet werden, die keinerlei bzw. keinen wesentlichen Relativbewegungen ausgesetzt ist. Egal, ob ein Distanzring eingesetzt ist, oder nicht, die Halbschalen können unter der Kraft der sie zuhaltenden Schlösser und Scharniere annähernd senkrecht auf die ihnen zugeordnete Dichtung gepresst werden.

Das erfindungsgemäße Koffersystem ist prinzipbedingt recht robust. Das ist deshalb von Bedeutung, da sich in der Praxis nie ganz ausschließen lässt, dass die Maschine doch einmal zur Seite sackt oder gar umfällt - etwa weil der Seitenständer versehentlich nicht richtig eingerastet oder wegen des schlechten Untergrundes nicht den erwarteten Halt findet. "Legt" sich die Maschine dann auf einen teleskopierbaren Koffer, dann besteht die Gefahr, dass der Koffer mit Gewalt "teleskopiert" wird. Ein solches führt i. d. R. zu einer Zerstörung des Teleskop-Mechanismusses, womit der gesamte Koffer unbrauchbar wird. Beim erfindungsgemäßen Koffer sieht die Sache anders aus. Bei ihm wird allenfalls die außenseitige, sich großflächig und damit robust am übrigen Koffer abstützende Schale eingedrückt. Dies führt meist nur zu einer Unansehnlichkeit (Kratzer, Stauchungen) der äußeren Schale, schlimmstenfalls zu deren Bruch. Das stellt aber letztendlich kein besonderes Malheur dar, da sich der Koffer i. d. R. durch Austausch der betroffenen Schale instand setzen lassen wird.

Der Anspruch 3 sieht eine besondere Ausgestaltungsform des erfindungsgemäßen Motorrad-Gepäckkoffer-Systems vor. Ein Totpunkt-Spannverschluss ist ein Verschluss, der beim Spannen die Entfernung zwischen seinem einen Ende, das an einem der beiden zueinander zu ziehenden Bauteile befestigt ist und seinem anderen Ende, das an dem anderen Bauteil befestigt ist, verkürzt. Dabei ist der Verschluss so gestaltet, dass im Zuge des Spannens ein Totpunkt überschritten wird und der Verschluss sich dann (in Spannrichtung gesehen) selbstverstärkend zuhält.

Mit einem solchen Totpunkt-Spannverschluss lässt sich auf sehr einfache und zuverlässige Art und Weise eine Schnellverstellung verwirklichen. Solange nur ein kleines Stauvolumen von dem Motorradkoffer verlangt wird, bleibt der Totpunkt-Spannverschluss geschlossen. Dadurch erzwingt er, dass das Scharnier eine definierte erste Position einnimmt in der sich die Kofferschalen so zuklappen lassen, dass sie aneinander anliegen. Sobald ein größeres Stauvolumen benötigt wird, wird der Totpunkt-Spannverschluss geöffnet. Dadurch werden die beiden Kofferschalen auseinandergedrückt. Zwischen die beiden Kofferschalen kann nun ein Distanzring eingesetzt werden.

Die Verwendung eines oder mehrerer Totpunkt-Spannverschlüsse erspart es dem Benutzer erst umständlich den Scharniermechanismus losschrauben oder zerlegen zu müssen. Stattdessen sind nur ein bzw. einige wenige Handgriffe erforderlich. Kein Teil muss völlig gelöst werden und kann dabei verloren gehen bzw. sich durch Vibrationen im Laufe der Zeit unbeabsichtigt von lösen.

Eine weitere Alternative für die Ausgestaltung des Scharniersystems gibt der Anspruch 9 vor - für den Fall, dass das Scharniersystem nicht nach Maßgabe des Anspruchs 3 oder der Ansprüche 4 bis 7 ausgestaltet werden soll. Im Rahmen des Anspruchs 9 ist vorgesehen, als Scharnier ein Mehrgelenkscharnier, etwa ein Vierpunktscharnier, vorzusehen. Ein solches Scharnier gestattet es, den Abstand der beiden Kofferschalen allein dadurch zu vergrößern, dass der Koffer ein Stück weit aufgeklappt wird. Nun wird der entsprechend gestaltete Distanzring eingesetzt und die betreffende Kofferschale gegen den Distanzring zugeklappt Selbstverständlich lässt sich der Koffer auch bei eingesetztem Distanzring noch weiter aufklappen.

Weitere Vorteile und Ausgestaltungsmöglichkeiten der Erfindung ergeben sich aus den nachfolgend erörterten Ausführungsbeispielen:
Die Fig. 1 zeigt eine Prinzipdarstellung eines Ausführungsbeispiels der Erfindung bei aufgeklappten Kofferschalen und kleinem Stauvolumen.
Die Fig. 2 zeigt das von der Fig.1 gezeigte Ausführungsbeispiel während des Auseinanderbewegens der Kofferschalen zum Zwecke der Vergrößerung des Stauvolumens.
Die Fig. 3 zeigt das von den Figuren 1 und 2 gezeigte Ausführungsbeispiel bei zum Zwecke der Vergrößerung des Stauvolumens eingesetztem Distanzring.
Die Fig. 4 zeigt einen speziellen Verstellmechanismus für ein Scharniersystem.
Die Fig. 5 zeigt einen erfindungsgemäß als eigenständige Tasche ausgestalteten Distanzring.
Fig. 6 bis Fig. 9 sind entfallen.
Die Fig. 10 zeigt eine andere Alternative für die Verstellung des Scharniersystems.
Die Fig. 11 zeigt einen Ausschnitt aus der Figur 4, allerdings mit einer weiteren Alternative - für die Verstellung des Scharnierssystems, nämlich mittels eines Totpunkt-Spannverschlusses.

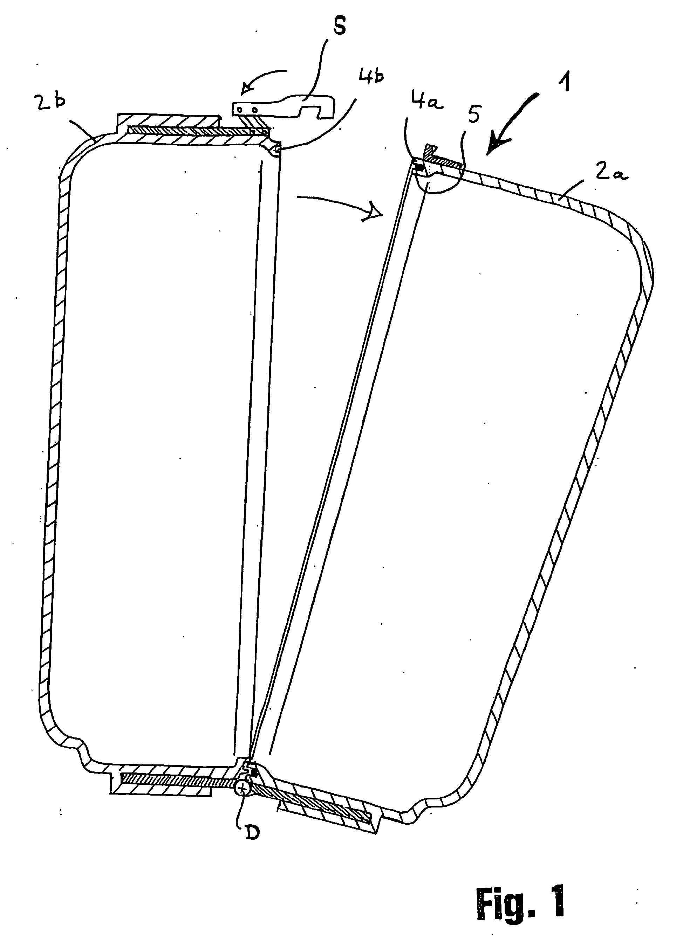

Die Fig. 1 zeigt einen Schnitt durch einen ein kleines Stauvolumen aufweisenden Gepäckkoffer des erfindungsgemäßen Motorrad-Gepäckkoffer-Systems.

Der Gepäckkoffer 1 besteht aus den Kofferschalen 2a und 2b, die über einen später noch genauer zu beschreibenden Scharniermechanismus 3 miteinander verbunden sind. Die Kofferschale 2b ist mittels einer entsprechenden Halterung (hier nicht gezeigt) am Fahrzeug zu befestigen. Die Schalen werden durch mindestens eine, in der Regel jedoch mehrere Schließen S zugehalten.

Jede der beiden Kofferschalen trägt an ihrem Rand eine umlaufende Nut 4a bzw. 4b. In den Nutgrund einer dieser Nuten ist eine umlaufende Dichtung 5 aus kompressiblem Material eingesetzt, vorzugsweise in Form einer als Hohlprofil ausgeführten Schnurdichtung. Die Nuten 4a und 4b sind so gestaltet, dass bei geschlossenem Koffer eine Wange der Nut 4b in die Nut 4a eingreift und die dort befindliche Dichtung 5 zusammendrückt. Umgekehrt greift eine Wange der Nut 4a in die Nut 4b ein. Auf diese Art und Weise entsteht bei geschlossenem Koffer eine Art "Labyrinth", das die Dichtung 5 unterstützt. Dabei ist die Achse A des Scharniersystems relativ zu den Nuten 4a und 4b so angeordnet, dass die Nuten beim Aufklappen des Koffers ohne Weiteres außer Eingriff kommen.

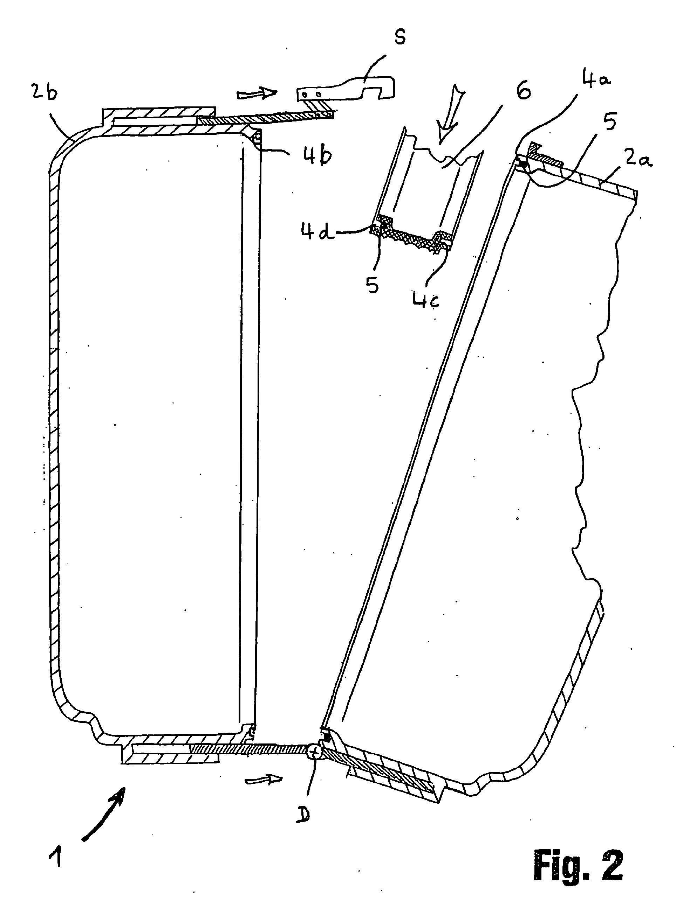

Die Fig. 2 zeigt, wie der Stauraum des Koffers vergrößert werden kann. Zu diesem Zweck wird die an der Kofferschale 2b festgesetzte Seite des Scharniersystems 3 gelöst und das Scharniersystem das erforderliche Stück weit aus seiner Führung an der Kofferschale 2b herausgezogen, sodass seine Scharnierachse in etwa unterhalb der Trennfuge zu liegen kommt, die sich später beim Aufklappen des vergrößerten Koffers auftut. In ähnlicher Weise wird mit den Schließen S verfahren, die ebenfalls mit einer entsprechenden Führung an der Kofferschale 2b befestigt sind.

In den aufgeklappten Koffer wird dann entlang der Pfeilrichtung ein Distanzring 6 eingesetzt, der in Fig. 2 nur angedeutet ist. Dieser Distanzring 6 ist an seinen Seiten mit umlaufenden Nuten 4c und 4d versehen, von denen eine ebenfalls einen Dichtring 5 der bereits beschriebenen Art trägt. Die Gestaltung der Nut 4c entspricht der der Nut 4b, sodass die Nut 4c in gleicher Weise mit der Nut 4a zusammenwirken kann, wie ansonsten die Nut 4b. Sinngemäß Gleiches gilt für die Nuten 4d und 4a. Alternativ bietet es sich an, die Nut 4d geringfügig anders zu dimensionieren, als die mit ihr korrespondierende Nut 4b (hier nicht zeichnerisch dargestellt). Nämlich so, dass der Distanzring 6 mit seiner Nut 4d in der Nut 4b verklemmt oder verrastet werden kann und sich der Distanzring 6 nur mit einem "Ruck" wieder von der Kofferschale 2b lösen lässt. Dadurch wird sichergestellt, dass sich der Distanzring 6 beim Öffnen des Koffers stets von der Kofferschale 2a löst und nicht unbeabsichtigt von der Kofferschale 2b abgezogen wird. Stattdessen können natürlich auch anderweitige zusätzliche Mittel vorgesehen werden, um den Distanzring 6 sicher mit der Kofferschale 2b zu verbinden, etwa separate Rastnasen, Schwenkhaken oder dergl. (nicht gezeigt).

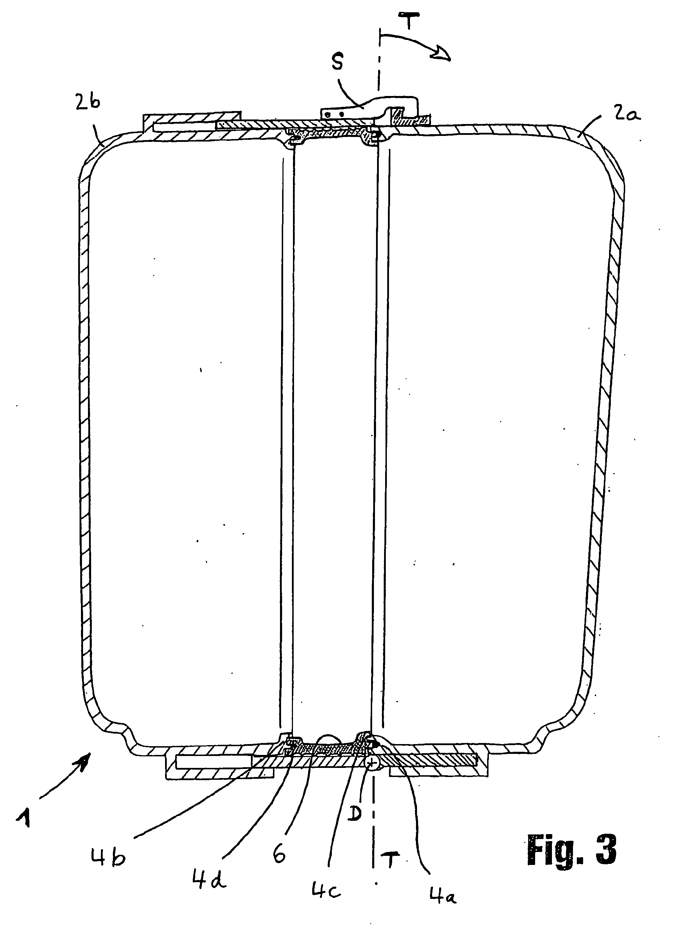

Die Fig. 3 zeigt das erfindungsgemäße Gepäckkoffer-System bei mit eingesetztem Distanzring 6 in geschlossenem Zustand. Sowohl das Scharniersystem 3 als auch die Schließen S übergreifen den Distanzring 6 und pressen die beiden Kofferschalen 2a und 2b gegen den Distanzring 6, so dass ein wasserdichter "Sandwich-Aufbau" entsteht.

Beim Aufklappen des Koffers wird die Kofferschale 2a vom Distanzring 6 abgezogen, wodurch sich der Koffer an der Trennfuge T öffnet.

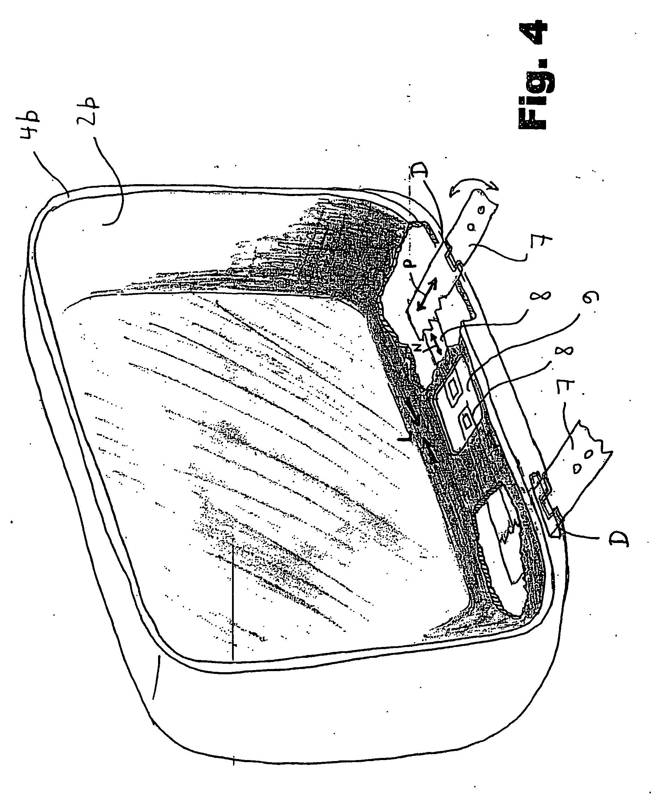

Die Fig. 4 zeigt, wie der Mechanismus zum Verschieben des Scharniersystems 3 ausgestaltet sein kann.

Deutlich zu erkennen ist hier wiederum die Kofferschale 2b, bei der es sich beispielsweise um die fahrzeugfest angebrachte Kofferschale handelt. Deren Nut 4b verläuft im Bodenbereich oberhalb der beiden einen Bestandteil des Scharniersystems 3 bildenden Einzelscharniere 7, die hier jeweils als ein Scharnier aus zwei gegeneinander verschwenkbaren Scharnierlappen ausgestaltet sind. Der der Kofferschale 2b zugeordnete Lappen jeder dieser Scharniere 7 läuft in einer entsprechenden, hier nicht gezeigten Führung der Kofferschale 2b. Diese Führung hält die Scharnierlappen verschiebbar in der Kofferschale 2b entlang des Pfeils P.

Ein weiterer Bestandteil des Scharniersystems 3 sind hier die als flache Schieber ausgeführten Ver- und Entriegelungsorgane 8. Diese laufen ebenfalls in einer entsprechenden Führung und sind dadurch quer zu den Scharnierlappen in Richtung des Pfeils N hin und her beweglich. Die Schieber 8 werden jeweils durch ein hier nicht gezeigtes Federelement in Richtung auf die ihnen zugeordneten Lappen des Scharniers 7 vorgespannt. Der entsprechende Lappen des Scharniers 7 trägt eine Rastverzahnung, der Schieber 8 trägt an seinem zugewandten Ende eine korrespondierende Rastverzahnung.

Solange die Schieber 8 durch die Federspannung an den entsprechenden Lappen des Scharniers7 gedrückt wird, ist der entsprechende Lappen des Scharniers 7 insoweit festgelegt, dass er nicht mehr in auswärtiger Richtung, heraus aus seiner Führung in der Kofferschale 2b gezogen werden kann.

Die Fig. 4 lässt erkennen, dass die Kofferschale 2b zumindest im Bereich des Scharniersystems doppelwandig ausgeführt ist, so dass die der Kofferschale 2b zugeordneten Scharnierlappen und die entsprechenden Schieber 8 (vom Kofferinneren her gesehen) quasi "unterflur" liegen. Der Kofferinnenboden weist ein Fenster 9 auf, das ggf. mit einer Kappe oder Klappe verschlossen sein kann, die verhindert, dass kleinere Gepäckteile in den doppelten Boden hineingeraten. In den Bereich dieses Fensters ragen die mit einem Griffloch oder einem Griffansatz versehenen Enden der Schieber 8 hinein. Dadurch können die beiden Schieber 8 mit einem Handgriff durch das Fenster 9 gelöst werden, beispielsweise indem je ein Finger in eines der Grifflöcher der Schieber greift und die Schieber 8 dann in Richtung der Pfeile L aufeinander zu gezogen und so gelüftet werden.

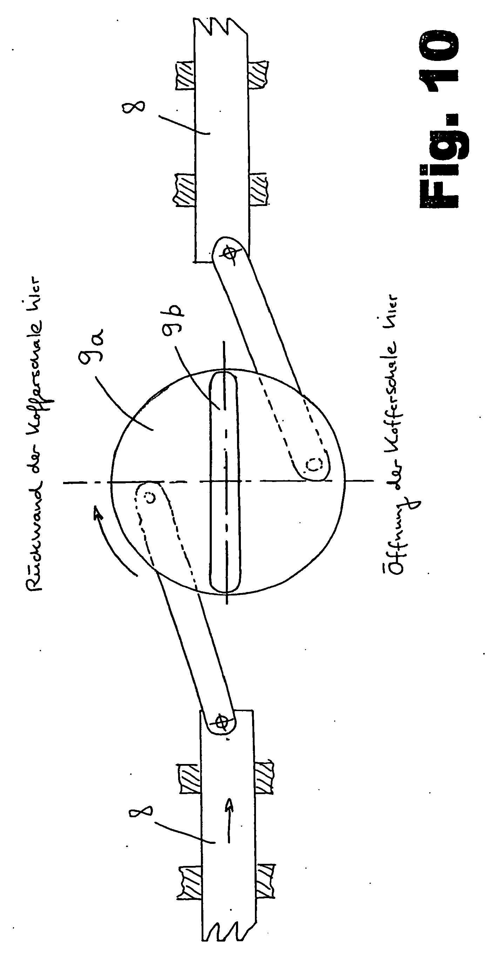

Selbstverständlich lässt sich der Betätigungsmechanismus für die Schieber 8 des Scharniersystems 3 z. B. auch so ausgestalten, wie von Fig. 10 schematisch gezeigt. Der Vorteil einer solchen Ausgestaltung ist der, dass das hier rund ausgeführte Fenster 9 durch den in ihm drehbar gehaltenen Drehknopf 9a verschlossen ist und der Rest der gesamten Mimik "unterflur" im doppelten Boden angeordnet ist, wodurch sich eine sehr ansprechende Lösung ergibt. Um die Lappen der Scharniere zu lösen, muss lediglich der Kopf 9a mittels seines Knebels 9b gegen die Wirkung einer hier nicht gezeigten Rückholfeder in Pfeilrichtung gedreht werden.

Sinnvollerweise ist die Rastverzahnung der Scharnierlappen und der Schieber 8 in etwa so ausgelegt, wie von Fig. 10 gezeigt. Nämlich derart, dass sich die Scharnierlappen auch dann, wenn die Schieber 8 mit ihnen im Eingriff stehen, in die Kofferschale 2b hineindrücken lassen. Das vereinfacht das Einsetzen des Distanzrings 6 wesentlich. Denn dann muss nach dem Einsetzen des Distanzrings und Zuklappen des Koffers nur noch von außen (z. B. mit dem Knie) auf die betreffende Schale gedrückt werden, um sozusagen "automatisch" die richtige Länge der Scharniere einzustellen - durch diesen Druck werden die in der Schale 2b geführten Lappen der Scharniere 7 "klack-klack-klack" wieder so weit in die Schale 2b hineingeschoben und dort festgehalten, dass die Schalen und der Distanzring bei geschlossenem Koffer satt aneinander anliegen. Diese Art des Einstellens ist besonders dann sinnvoll, wenn zu dem Koffersystem verschieden breite Distanzringe 6 gehören, die Scharniere 7 also nicht nur zwischen zwei Extrempositionen hin- und her geschoben werden.

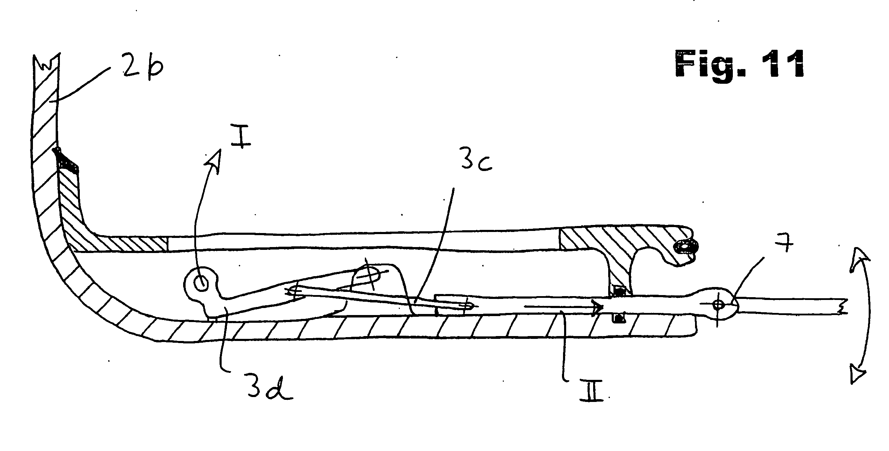

Die Fig. 11 zeigt eine weitere, grundsätzliche Alternative für die Verstellung des Scharniersystems 3. Zur Orientierung sei angemerkt, dass die Fig. 11 einen Ausschnitt der von Fig. 4 gezeigten Kofferschale 2b im Bereich eines Scharniers 7 zeigt.

Der in der Kofferschale 2b verschiebbar Lappen des Scharniers 7 wird nämlich hier durch eine Mimik nach Art eines Totpunkt-Spannverschlusses gehalten.

Schwenkt man den Schwenkhebel 3d in Richtung des Pfeils I, dann wird das Koppelglied 3c im Wesentlichen nach rechts verlagert und der von der Kofferschale 2b geführte Lappen des Scharniers 7 entlang des Pfeils I nach außen geschoben. Auf diese Art und Weise werden die beiden Kofferschalen 2b und 2a (letztere hier nicht gezeigt) auseinander geschoben und Platz für das Einsetzen eines Distanzrings 6 geschaffen. Günstig wirkt sich hier das Totpunkt-Prinzip aus - in der Position, die von Fig. 11 gezeigt wird, können am Scharnier 7 beliebige Zugkräfte nach außen, weg von der Kofferschale 2b auftreten, ohne dass der Scharnierlappen in Richtung des Pfeils II gezogen werden kann. Auch wenn der Spannverschluss entlang des Pfeils I völlig aufgeklappt worden ist, können nahezu beliebige Kräfte am Scharnierlappen des Scharniers 7 auftreten, ohne dass das Scharnier weiter nach außen verlagert werden kann. Denn der Spannverschluss ist ja nun völlig "lang gemacht".

Diese Konstruktion ist recht bedienerfreundlich. Wenn der Spannverschluss in geeigneter Weise auf die Breite des Distanzrings 6 abgestimmt ist, muss der Benutzer, (anders als bei einem mittels einer Schraube über ein Langloch justierbaren Scharnierlappen) keinerlei "Maßarbeit" leisten, um das Volumen zu verkleinern oder zu vergrößern. Er muss lediglich den Spannverschluss auf- oder zuklappen und den Distanzring einsetzen. Alles andere passt von alleine.

Der Vollständigkeit halber ist festzuhalten, dass sich die soeben für das Scharniersystem beschriebenen Verstellsysteme auch für die Verstellung der Schließen S verwenden lassen (ggf. mit gewissen, sich für den Fachmann aus der Funktion von allein ergebenden Modifikationen).

Ganz generell ist sodann noch anzumerken, dass die Kofferschalen 2a und 2b in den Figuren durchweg als (weitgehend) einwandige Hartschalen dargestellt sind. Sie können jedoch, ohne dass der Erfindungsgedanke verlassen wird, auch als doppelwandige oder zumindest bereichsweise doppelwandige Hartschalen ausgeführt werden, sowie als Gebilde aus Textil oder Stoff, die im Bereich ihrer Öffnungen (d. h. im Großraum ihrer Nuten 4a, 4b) durch einen entsprechenden Rahmenabschnitt aufgespannt gehalten werden.

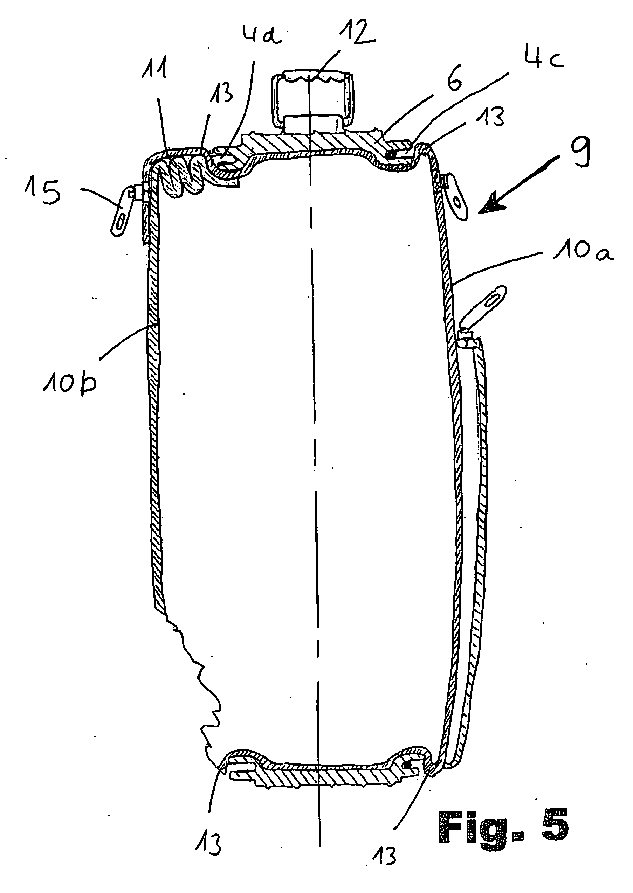

Die Fig. 5 zeigt eine spezielle Ausgestaltung des Distanzrings 6.

Der Distanzring ist hier als rahmenartiger Teil einer aus Gewebe oder geeignetem Synthetikmaterial bestehenden, im Regelfall weichen Tasche 9 ausgeführt, die das Motocrad-Gepäckkoffer-System besonders flexibel verwendbar werden lässt.

Die Fig. 5 zeigt links und rechts ihrer Mittellinie zwei unterschiedliche Ausgestaltungsarten der Tasche, der Rahmen 6 ist immer der gleiche.

In der rechten Hälfte ist eine simple, z. B. nach Art einer Laptop-Tasche ausgeführte Tasche zu erkennen. Der weiche Taschenteil 10a ist in die Innenseite 6 des Rahmens 6 eingeklebt (oder auch genietet o. ä.). Der Taschenkörper 10a ist dabei so ausgeführt, dass er im Bereich der Nuten 4c und 4d des Distanzrings 6 entsprechende Falten 13 wirft, die die Nuten 4c und 4d beim Gebrauch der Tasche 9 außerhalb des Motorrad-Koffer-Systems verdecken. Auf Motorradtouren nimmt diese Tasche Wertgegenstände, Papiere oder Utensilien auf, die besonders häufig oder dringend benötigt werden. Die Tasche wird mit ihrem durch den Distanzring 6 gebildeten Rand in der erfindungsgemäßen Weise für die Fahrt zwischen den Kofferschalen aufgenommen. Wird bei Fahrtende nur ein Teil des Gepäcks benötigt oder sollen nach Fahrtende die Wertsachen nicht beim Motorrad verbleiben, so wird der Gepäckkoffer aufgeklappt, die Tasche ausgehängt, der Gepäckkoffer wieder zugeklappt und die Tasche mit ins Hotel genommen.

Auch als Laptop-Tasche ist diese Tasche ausgesprochen praktisch. Denn sie stellt bei alltäglichen Fahrten ins Büro sicher, dass das Laptop während der Fahrt ins Büro nicht in dem viel zu großen Koffer "herumvagabundiert", sondern durch das Einhängen der Tasche in dem ansonsten leeren Koffer absolut stoßsicher gehalten wird.

Links der Symmetrielinie ist eine andere Ausführungsform der Tasche gezeigt, die im Prinzip der bereits beschriebenen Tasche entspricht. Das Charakteristikum dieser Ausführungsform ist, dass der Taschenkörper 10b mit ziehharmonikaartigen Faltungen 13 versehen ist (hier nur die obere Faltung gezeigt). Diese gestattet es, durch Öffnung des Reißverschlusses 15 das Volumen der Tasche zu vergrößern, vorzugsweise so, dass die Tasche nach dem Einsetzen in den Motorradkoffer den gesamten Stauraum einer oder beider Kofferschalen ausfüllt. Auf diese Art und Weise erhält man einen taschenartigen Einsatz für den Motorradkoffer, der es gestattet, einen wesentlichen Teil oder das gesamte im Motorradkoffer untergebrachte Gepäck mit einem Griff aus dem Motorradkoffer zu entnehmen und in der Tasche 9 abzutransportieren, z. B. auf das Hotelzimmer.

Nicht zeichnerisch dargestellt ist ein gerade bei Ausgestaltung des Distanzrings 6 als eigenständige Tasche recht praktisches Extra des Koffers - in mindestens einer der Kofferschalen sind Gepäckhaltemittel vorgesehen, die das dort untergebrachte Gepäck halten und gegen Herausfallen sichern, insbesondere auch beim Aufklappen des Koffers. Auf diese Art und Weise wird es sehr bequem möglich, den Koffer vollständig zu beladen und dann die den Kofferstauraum vergrößernde Tasche einzusetzen und bei Bedarf auch wieder herauszunehmen - ohne dass jeweils der ganze Koffer entladen werden muss. Die Gepäckhaltemittel können dabei beispielsweise als eine raffbare und mit einem Reißverschluss oder Klettverschluss rundum befestigbare Stofffläche oder Platte ausgeführt sein, die die entsprechende Kofferschale in ihrem geöffnetem Zustand nach außen verschließt - so, dass die Kofferschale mit der Stoffwand oder Platte einen vollständig umschlossenen Raum bildet.

## Patentansprüche

1. Volumenverstellbares Motorrad-Gepäckkoffer-System bestehend aus mindestens einem Koffer (1) mit zwei durch ein Scharniersystem (3) auf- und zuklappbar miteinander verbundenen Kofferschalen (2a, 2b), wobei die Kofferschalen derart quer zueinander beweglich gehalten sind, dass sie relativ zueinander von einer ersten Position, in der der geschlossene Koffer (1) ein kleineres Stauvolumen aufweist, in eine zweite Position überführbar sind, in der der geschlossene Koffer (1) ein größeres Stauvolumen aufweist, **dadurch gekennzeichnet, dass** der Koffer einen in den aufgeklappten Koffer einsetzbaren Distanzring aufweist und das Scharniersystem (3), welches die beiden Kofferschalen (2a, 2b) zuklappbar miteinander verbindet, derart gestaltet ist, dass es ohne Beeinträchtigung der Auf- und Zuklappbarkeit des Koffers wahlweise möglich ist, den Koffer (1) entweder so zu schließen, dass die beiden Kofferschalen (2a, 2b) in geschlossenem Zustand unmittelbar gegeneinander anliegen, oder alternativ so zu schließen, dass die beiden Kofferschalen (2a, 2b) in geschlossenem Zustand gegen den Distanzring anliegen, der sie auf Abstand hält und das Stauvolumen des geschlossenen Koffers (1) vergrößert.

2. Motorrad-Gepäckkoffer-System nach Anspruch 1, **dadurch gekennzeichnet, dass** zum Koffersystem verschieden breite Distanzringe (6) gehören, dass das Scharniersystem (3) derart gestaltet ist, dass es nicht nur zwischen zwei Extrempositionen hin- und hergeschoben werden kann und dass es ohne Beeinträchtigung der Auf- und Zuklappbarkeit des Koffers wahlweise möglich ist, den Koffer entweder so zu schließen, dass die beiden Kofferschalen (2a, 2b) in geschlossenem Zustand unmittelbar gegeneinander oder gegen einen schmalen Distanzring oder gegen einen breiteren Distanzring anliegen.

3. Motorrad-Gepäckkoffer-System nach Anspruch 1 oder 2, **dadurch gekennzeichnet, dass** das Scharniersystem (3) mindestens einen Totpunkt-Spannverschluss (3b, 3c, 3d) umfasst, der in seiner geschlossenen Position die beidem Kofferschalen (2a, 2b) so miteinander verbindet, dass der Koffer (1) ein kleineres Stauvolumen aufweist und in seiner geöffneten Position die beiden Kofferschalen (2a, 2b) so miteinander verbindet, dass der Koffer (1) ein größeres Stauvolumen aufweist.

4. Motorrad-Gepäckkoffer-System nach einem der vorhergehenden Ansprüche, **dadurch gekennzeichnet, dass** das Scharniersystem (3) eine Schwenkachse (D) vorgibt, um die herum eine der Kofferschalen (2a, 2b) beim Auf- und Zuklappen eine reine Drehbewegung ausführt und das Scharniersystem (3) derart lösbar an einer Kofferschale befestigt ist, dass die besagte Schwenkachse (D) nach dem Entriegeln des Scharniersystems aus einer ersten, einem kleineren Stauraum entsprechenden Position in mindestens eine zweite, einem größeren Stauraum entsprechenden Position relativ zu der Kofferschale gebracht und dort wieder verriegelt werden kann.

5. Motorrad-Gepäckkoffer-System nach Anspruch 4, **dadurch gekennzeichnet, dass** das Scharniersystem (3) einen entsprechend gestalteten Schenkel oder Abschnitt aufweist, der in einer durch Klemmung oder Verrastung verriegelbaren Führung der Kofferschale geführt ist, die derart ausgestaltet ist, dass sich das Scharniersystem (3) nach dem Verriegeln nicht weiter aus den Kofferschalen (2a, 2b) herausziehen lässt, sich jedoch trotz der Verrastung zumindest in eine Kofferschale noch weiter hineindrücken lässt, so dass der Abstand der Kofferschalen (2a, 2b) im Scharnierbereich verringert wird.

6. Motorrad-Gepäckkoffer-System nach Anspruch 4 oder 5, **dadurch gekennzeichnet, dass** sich sämtliche bestimmungsgemäß verschiebbaren Schenkel oder Abschnitte des Scharniersystems (3) durch Betätigung eines zentralen Ver- und Entriegelungsorgans lösen und wieder festsetzen lassen, wo bei das Ver- und Entriegelungsorgan vorzugsweise einen oder mehrere Schieber bzw. Stangen umfasst ist, die an einem zentralen Punkt so aufeinander zulaufen, dass sie an besagtem zentralen Punkt alle gleichzeitig betätigt werden können.

7. Motorrad-Gepäckkoffer-System nach einem der Ansprüche 4 bis 6, **dadurch gekennzeichnet, dass** das Ver- und Entriegelungsorgan nur vom Kofferinneren her deaktiviert werden kann.

8. Motorrad-Gepäckkoffer-System nach einem der Ansprüche 4 bis 7, **dadurch gekennzeichnet, dass** das Scharniersystem (3) ausschließlich außerhalb des Bereichs, der durch die die beiden Kofferschalen (2a, 2b) gegeneinander bzw. gegen den Distanzring abdichtenden Dichtflansche eingeschlossen wird, angeordnet ist.

9. Motorrad-Gepäckkoffer-System nach Anspruch 1 oder 2, **dadurch gekennzeichnet, dass** das Scharniersystem (3) ein Mehrgelenkscharnier ist, das die beiden von ihm miteinander verbundenen Kofferschalen (2a, 2b) beim Öffnen sowohl gegeneinander verschwenkt als auch gleichzeitig translatorisch relativ zueinander bewegt und derart ausgelegt und an den Kofferschalen befestigt ist, dass die beiden Kofferschalen im Zuge des Öffnens zumindest während einer ersten Phase des Öffnens im Wesentlichen translatorisch relativ zueinander bewegt werden und daran anschließend vorzugsweise im Wesentlichen relativ zueinander verschwenkt werden.

10. Motorrad-Gepäckkoffer-System nach einem der vorhergehenden Ansprüche, **dadurch gekennzeichnet, dass** Scharniersystem (3) an zumindest einer der Kofferschalen (2a, 2b) in einem doppelwandigen Bereich der betreffenden Kofferschale zwischen der Innen- und der Außenschale untergebracht ist.

11. Motorrad-Gepäckkoffer-System nach einem der vorhergehenden Ansprüche, **dadurch gekennzeichnet, dass** das System eine in den Koffer (1) hineinpassende Gepäcktasche (9) umfasst, die aus einem starren, den Distanzring (6) bildenden und zwischen die Kofferschalen (2a bzw. 2b) einsetzbaren Rahmenteil besteht, das Seitenwände (10a, 10b), vorzugsweise aus Gewebe, weichem Kunststoff oder Leder besitzt, die zusammen mit dem Rahmenteil eine vollwertige, auch unabhängig von dem Koffer (1) benutzbare Tasche bilden.

12. Motorrad-Gepäckkoffer-System nach einem der vorhergehenden Ansprüche in Verbindung mit Anspruch 10, **dadurch gekennzeichnet, dass** eine, vorzugsweise beide Kofferschalen (2a, 2b) mit Gepäckhaltemitteln ausgerüstet sind, die es erlauben an der Innenseite der jeweiligen Kofferschale Gepäck derart zu befestigen, dass die Tasche (9) ungestört vom bereits in der Kofferschale befindlichen Gepäck eingesetzt und herausgenommen werden kann.

13. Motorrad-Gepäckkoffer-System nach einem der vorhergehenden Ansprüche, **dadurch gekennzeichnet, dass** jeder der Kofferschalen (2a, 2b) an ihrem Rand, mit dem sie bei geschlossenem Koffer (1) an der anderen Kofferschale zu liegen kommt, umlaufend eine durch zwei örtliche Nutwangen gebildete Nut (4a, 4b) aufweist, wobei jede der Nuten (4a, 4b) so ausgebildet ist, dass sie bei geschlossenem Koffer (1) mit einer ihrer Wangen in eine entsprechende Nut der anderen Kofferschale eingreift und umgekehrt.

14. Motorrad-Gepäckkoffer-System nach Anspruch 13, **dadurch gekennzeichnet, dass** der Distanzring (6) an seinen beiden Rändern, mit denen er bei geschlossenem Koffer (1) an den beiden Kofferschalen (2a, 2b) zu liegen kommt, umlaufend eine durch zwei örtliche Nutwangen gebildete Nut (4c, 4d) aufweist, wobei jede der Nuten (4c, 4d) so ausgebildet ist, dass sie bei geschlossenem Koffer (1) mit einer ihrer Wangen in eine entsprechende Nut (4a, 4b) der der ihr zugeordneten Kofferschale (2a bzw. 2b) eingreift und umgekehrt.

15. Motorrad-Gepäckkoffer-System, nach Anspruch 13 oder 14, **dadurch gekennzeichnet, dass** im Nutgrund einer der beiden jeweils zusammenwirkenden Nuten (4a, 4b, 4c, 4d) eine Elastomerdichtung (5) eingelegt bzw. gefangen ist, vorzugsweise eine Schnurdichtung mit Hohlquerschnitt.

## Claims

1. Volume-adjustable motorcycle luggage case system, consisting of at least one case (1) with two case shells (2a, 2b) connected to each other through a hinge system (3) so as to be capable of being folded open and shut, the case shells being held transversely moveable relative to each other in such a way that they can be transferred, relative to each other, from a first position in which the shut case (1) has a smaller storage volume into a second position in which the shut case (1) has a larger storage volume, **characterised in that** the case has a spacer ring that can be inserted into the opened case and the hinge system (3) connecting the two case shells (2a, 2b) to each other so that they can be folded shut is designed such that is optionally possible, without affecting the capability of the case to be folded open and shut, either to shut the case (1) in such a way that the two case shells (2a, 2b) rest directly against each other in the shut state, or alternatively to shut it in such a way that the two case shells (2a, 2b) in the shut state rest against the spacer ring, which keeps them at a distance from each other and increases the storage volume of the shut case (1).

2. Motorcycle luggage case system according to claim 1, **characterised in that** spacer rings (6) of different widths belong to the case system, that the hinge system (3) is designed such that can be pushed back and forth not only between two extreme positions, and that is optionally possible, without affecting the capability of the case to be folded open and shut, either to shut the case in such a way that the two case shells (2a, 2b) in the shut state rest directly against each other, or against a narrow spacer ring, or against a wider spacer ring.

3. Motorcycle luggage case system according to claim 1 or 2, **characterised in that** the hinge system (3) comprises at least one dead centre tension lock (3b, 3c, 3d), which in its closed position interconnects the two case shells (2a, 2b) in such a way that the case (1) has a smaller storage volume, and in its open position interconnects the two case shells (2a, 2b) in such a way that the case (1) has a larger storage volume.

4. Motorcycle luggage case system according to any one of the preceding claims, **characterised in that** the hinge system (3) defines a pivot axis (D) about which one of the case shells (2a, 2b) executes a purely rotary motion during opening and shutting, and the hinge system (3) is detachably attached to a case shell in such a way that, after the hinge system has been unlocked, said pivot axis can be brought from a first position corresponding to a smaller storage space into at least a second position corresponding to a larger storage space, relative to the case shell, and can be re-locked there.

5. Motorcycle luggage case system according to claim 4, **characterised in that** the hinge system (3) comprises a correspondingly designed leg or portion guided in a guiding portion of the case shell that can be locked by clamping or latching and is configured in such a way that the hinge system (3) cannot be pulled out further from the case shells (2a, 2b) after locking, but despite the latching can be pushed even further into at least one case shell , so that the distance of the case shells (2a, 2b) in the hinge area is reduced.

6. Motorcycle luggage case system according to claim 4 or 5, **characterised in that** all legs or portions of the hinge system (3) that can be displaced as intended can be loosened and refastened by actuating a central locking and unlocking means, the locking and unlocking means preferably comprising one or more slides or rods which run toward one other at a central point so that they can all be actuated simultaneously at said central point.

7. Motorcycle luggage case system according to any one of the claims 4 to 6, **characterised in that that** the locking and unlocking means can be deactivated only from inside the case.

8. Motorcycle luggage case system according to any one of the claims 4 to 7, **characterised in that** the hinge system (3) is disposed exclusively outside the area enclosed by the sealing flanges sealing the two case shells (2a, 2b) against each other or against the spacer ring.

9. Motorcycle luggage case system according to claim 1 or 2, **characterised in that** the hinge system (3) is a multiple-joint hinge, which both pivots the two case shells (2a, 2b) interconnected by it relative to each other during opening as well as simultaneously moves them translationally relative to each other, and is designed and attached to the case shells in such a way that the two case shells are substantially translationally moved relative to each other during opening, at least during a first phase of the opening, and, subsequent thereto, are preferably substantially pivoted relative to each other.

10. Motorcycle luggage case system according to any one of the preceding claims, **characterised in that** the hinge system (3) is disposed at at least one of the case shells (2a, 2b) in a double-walled area of the case shell concerned between the inner and the outer shell.

11. Motorcycle luggage case system according to any one of the preceding claims, **characterised in that** the system comprises a luggage bag (9) fitting into the case (1), which consists of a rigid frame part that forms the spacer ring (6) and can be inserted between the case shells (2a or 2b), which has side walls (10a, 10b), preferably consisting of fabric, soft plastic or leather, which together with the frame part form a fully-fledged bag that can also be used independently from the case (1).

12. Motorcycle luggage case system according to any one of the preceding claims in conjunction with claim 10, **characterised in that** one, preferably both, of the case shells (2a, 2b) are equipped with luggage retaining means which permit fastening luggage to the inside of the respective case shell in such a way that the bag (9) can be inserted and removed unimpeded by luggage already located in the case shell.

13. Motorcycle luggage case system according to any one of the preceding claims, **characterised in that** each of the case shells (2a, 2b) has a groove (4a, 4b) formed by two local groove cheeks around its edge with which it comes to rest against the other case shell when the case (1) is shut, with each of the grooves (4a, 4b) being configured so as to engage, with one of its cheeks, a corresponding groove of the other case shell when the case is shut (1) and vice versa.

14. Motorcycle luggage case system according to claim 13, **characterised in that** the spacer ring (6) has a groove (4c, 4d) formed by two local groove cheeks around its two edges with which it comes to rest against the two case shells (2a, 2b) when the case (1) is shut, with each of the grooves (4c, 4d) being configured so as to engage, with one of its cheeks, a corresponding groove (4a, 4b) of the case shell (2a or 2b) associated with it when the case is shut (1) and vice versa.

15. Motorcycle luggage case system according to claim 13 or 14, **characterised in that** an elastomer seal (5), preferably a cord seal with a hollow cross section, is inserted into or trapped in the groove bottom of one of the two respectively cooperating grooves (4a, 4b, 4c, 4d).

## Revendications

1. Système de coffre à bagages à volume variable pour motocyclettes, comprenant au moins un coffre (1) avec deux coques de coffre (2a, 2b) reliées l'une à l'autre par un système de charnière (3) de manière à basculer en ouverture et en fermeture, dans lequel les coques de coffre sont maintenues mobiles transversalement l'une par rapport à l'autre de telle façon qu'elles peuvent être passées relativement l'une à l'autre depuis une première position, dans laquelle le coffre (1) fermé présente un volume de contenance plus faible, jusque dans une seconde position, dans laquelle le coffre (1) fermé présente un volume de contenance plus élevée, **caractérisé en ce que** le coffre comprend une bague d'écartement, susceptible d'être mise en place dans le coffre basculé en ouverture, et le système de charnière (3), qui relie les deux coques de coffre (2a, 2b) l'une avec l'autre de manière à basculer en fermeture, est conçu de telle façon qu'il est possible, sans nuire à la faculté de basculement du coffre en ouverture et en fermeture, au choix de fermer le coffre (1) soit de telle manière que les deux coques de coffre (2a, 2b) sont appliquées directement l'une contre l'autre dans la situation fermée, soit en variante de telle manière que les deux coques de coffre (2a, 2b) sont appliquées contre la bague d'écartement dans la situation fermée, laquelle les maintient à distance et augmente le volume de contenance du coffre (1) fermé.

2. Système de coffre à bagages pour motocyclettes selon la revendication 1, **caractérisé en ce que** des bagues d'écartement (6) de différentes largeurs appartiennent au système de coffre, **en ce que** le système de charnière (3) est ainsi conçu qu'il peut être déplacé en va-et-vient non seulement entre deux positions extrêmes, et **en ce qu'**il est possible, sans nuire à la faculté de basculement du coffre en ouverture et en fermeture, au choix de fermer le coffre soit de telle manière que, dans la situation fermée, les deux coques de coffre (2a, 2b) sont appliquées directement l'une contre l'autre, soit contre une bague d'écartement étroite, soit encore contre une bague d'écartement plus large.

3. Système de coffre à bagages pour motocyclettes selon la revendication 1 ou 2, **caractérisé en ce que** le système de charnière (3) comprend au moins une fermeture-tendeur à dépassement de point mort (3b, 3c, 3d) qui, dans sa position fermée, relie les deux coques de coffre (2a, 2b) l'une à l'autre de telle façon que le coffre (1) présente un volume de contenance plus faible, et qui, dans sa position ouverte, relie les deux coques de coffre (2a, 2b) l'une à l'autre de telle façon que le coffre (1) présente un volume de contenance plus élevée.

4. Système de coffre à bagages pour motocyclettes selon l'une des revendications précédentes, **caractérisé en ce que** le système de charnière (3) impose un axe de pivotement (D) autour duquel l'une des coques de coffre (2a, 2b) exécute, lors du basculement en ouverture et en fermeture, un pur mouvement de rotation, et le système de charnière (3) est fixé sur l'une des coques de coffre en étant libérable, de telle manière que l'axe de pivotement précité (B) peut être amené, après le déverrouillage du système de charnière, par rapport à la coque de coffre depuis une première position correspondant à un volume de contenance plus faible, jusque dans au moins une seconde position correspondant à un volume de contenance plus élevée, et être à nouveau verrouillé dans celle-ci.

5. Système de coffre à bagages pour motocyclettes selon la revendication 4, **caractérisé en ce que** le système de charnière (3) comprend une branche ou un tronçon conçu de façon correspondante, qui est guidé(e) dans un guidage de la coque de coffre, capable d'être verrouillé par coincement ou par enclenchement, qui est conçu de telle façon qu'après le verrouillage le système de charnière (3) ne peut plus être extrait plus loin hors des coques de coffre (2a, 2b), mais peut, malgré l'enclenchement, être enfoncé plus loin au moins dans une coque de coffre, de telle façon que la distance des coques de coffre (2a, 2b) est réduite dans la zone de charnière.

6. Système de coffre à bagages pour motocyclettes selon la revendication 4 ou 5, **caractérisé en ce que** la totalité des branches ou des tronçons, mobile conformément à leur destination, du système de charnière (3) peuvent être libéré(e)s et à nouveau bloqué(e)s par actionnement d'un organe centralisé de verrouillage/déverrouillage, dans lequel l'organe de verrouillage/déverrouillage inclut de préférence un ou plusieurs coulisses ou une ou plusieurs tringles, qui convergent en un point central les unes vers les autres, de sorte qu'elles peuvent être toutes actionnées simultanément au niveau du point central.

7. Système de coffre à bagages pour motocyclettes selon l'une des revendications 4 à 6, **caractérisé en ce que** l'organe de verrouillage/déverrouillage ne peut être désactivé que depuis l'intérieur du coffre.

8. Système de coffre à bagages pour motocyclettes selon l'une des revendications 4 à 7, **caractérisé en ce que** le système de charnière (3) est agencé exclusivement à l'extérieur de la région qui est enfermée par les brides d'étanchement qui étanchent les deux coques de coffre (2a, 2b) l'une contre l'autre ou contre la bague d'écartement.

9. Système de coffre à bagages pour motocyclettes selon la revendication 1 ou 2, **caractérisé en ce que** le système de charnière (3) est une charnière à plusieurs articulations qui, lors de l'ouverture, déplace les deux coques de coffre (2a, 2b) reliées l'une à l'autre par lui-même à la fois en pivotement l'une par rapport à l'autre et simultanément en translation l'une par rapport à l'autre, et est conçu de telle façon et fixé sur les coques de coffre de telle manière que les deux coques de coffre, au cours de l'ouverture et au moins pendant une première phase de l'ouverture, sont déplacées essentiellement en translation l'une par rapport à l'autre et sont ensuite de préférence essentiellement pivotées l'une par rapport à l'autre.

10. Système de coffre à bagages pour motocyclettes selon l'une des revendications précédentes, **caractérisé en ce que** le système de charnière (3) est logé sur l'une au moins des coques de coffre (2a, 2b) dans une zone à double paroi de la coque de coffre concerné entre la coquille intérieure et la coquille extérieure.

11. Système de coffre à bagages pour motocyclettes selon l'une des revendications précédentes, **caractérisé en ce que** le système comprend un sac à bagages (9) ajusté pour entrer dans le coffre (1), qui est composé d'une première partie de cadre rigide, qui forme la bague d'écartement (6) et qui peut être mise en place entre les coques de coffre (2a et 2b), ladite partie possédant des parois latérales (10a, 10b), de préférence en tissu, en matière plastique souple ou en cuir, qui forment conjointement avec la partie de cadre un sac à part entière, également utilisable indépendamment du coffre (1).

12. Système de coffre à bagages pour motocyclettes selon l'une des revendications précédentes en dépendance de la revendication 10, **caractérisé en ce qu'**une coque de coffre (2a, 2b), de préférence les deux, est/sont équipée(s) de moyens de maintien de bagages, qui permettent de fixer des bagages contre la face intérieure de la coque de coffre respective de telle manière que le sac (9) peut être mis en place et extrait sans être dérangé par des bagages qui se trouvent déjà dans la coque de coffre.

13. Système de coffre à bagages pour motocyclettes selon l'une des revendications précédentes, **caractérisé en ce que** chacune des coques de coffre (2a, 2b) comporte, au niveau de sa bordure avec laquelle, lorsque le coffre (1) est fermé, elle vient s'appliquer contre l'autre coque de coffre, une gorge périphérique (4a, 4b) formée par deux flancs de gorge localisés, chacune des gorges (4a, 4b) étant ainsi réalisée que, lorsque le coffre (1) est fermé, elle s'engage par l'un de ses flancs dans une gorge correspondante de l'autre coque de coffre et vice versa.

14. Système de coffre à bagages pour motocyclettes selon la revendication 13, **caractérisé en ce que** la bague d'écartement (6) comporte, au niveau de ses deux bordures avec lesquelles, lorsque le coffre (1) est fermée, elle vient s'appliquer contre les deux coques de coffre (2a, 2b), une gorge périphérique (4c, 4d) formée par deux flancs de gorge localisés, chacune des gorges (4c, 4d) étant ainsi réalisée que, lorsque le coffre (1) est fermé, elle s'engage par l'un de ses flancs dans une gorge correspondante (4a, 4b) de la coque de coffre (2a ou 2b) qui lui est associée.

15. Système de coffre à bagages pour motocyclettes selon la revendication 13 ou 14, **caractérisé en ce qu'**un joint élastomère (5) est posé ou respectivement retenu au fond de l'une des deux gorges (4a, 4b, 4c, 4d) respectivement en coopération, de préférence un joint en forme de cordon à section creuse.
